(19) **Europäisches Patentamt**
**European Patent Office**
**Office européen des brevets**

(11) Veröffentlichungsnummer: **0 005 770**
**B1**

(12) **EUROPÄISCHE PATENTSCHRIFT**

(45) Veröffentlichungstag der Patentschrift: **16.06.82**

(51) Int. Cl.³: **H 04 N 7/00, H 04 M 11/06**

(21) Anmeldenummer: **79101518.3**

(22) Anmeldetag: **18.05.79**

(54) Anordnung für einen Modem.

(30) Priorität: **27.05.78 DE 2823180**

(43) Veröffentlichungstag der Anmeldung:
**12.12.79 Patentblatt 79/25**

(45) Bekanntmachung des Hinweises auf die Patenterteilung:
**16.06.82 Patentblatt 82/24**

(84) Benannte Vertragsstaaten:
**AT BE CH DE FR GB IT LU NL SE**

(56) Entgegenhaltungen:
**DE - A - 2 460 976**

WIRELESS WORLD, Vol. 83, Nr. 1496, April 1977, London, GB, FEDIDA: "Viewdata. 3-Operation of the system; terminals and codes", Seiten 65—69
FUNKSCHAU, Heft 17, 1977, München DE, KLEINKE: "Gedanken zum Aufbau eines Bildschirmtext dienstes im Fernmeidenetz der Bundesrepublik Deutschland", Seiten 791—795

(73) Patentinhaber: **TE KA DE Felten & Guilleaume Fernmeldeanlagen GmbH**
**Thurn-und-Taxis-Strasse 10 Postfach 4943**
**D-8500 Nürnberg 1 (DE)**

(72) Erfinder: **Parras, Karlheinz Dipl.-Ing.**
**Wilhelm Späth-Strasse 8**
**D-8500 Nürnberg (DE)**

(74) Vertreter: **Peuckert, Hermann**
**TE KA DE Fernmeldeanlagen**
**Unternehmensbereich der Philips Kommunikations Industrie AG Postfach 49 43,**
**Thurn-und-Taxis-Strasse 10**
**D-8500 Nürnberg (DE)**

EP 0 005 770 B1

## Anordnung für einen Modem

Die Erfindung bezieht sich auf eine Anordnung für einen Modem zum Empfang bestimmter, auf dem Bildschirm eines Fernsehempfängers darzustellender Datensignale, die von einer Zentralstation ausgesendet und über eine Fernsprech-Wählverbindung übertragen werden, wie beispw. aus Wireless World, April 1977, S. 65—69, oder Funkschau, 17/1977, S. 791—795, bekannt.

Eine Aufgabe eines derartigen Modems ist, die ankommenden, in modulierter Form vorliegenden Datensignale in die ursprüngliche binäre Rechteckform zu demodulieren und diese rechteckförmigen Datensignale über eine bestimmte Sendeanordnung und eine gesonderte Verbindungsleitung einer im Fernsehempfänger angeordneten Decodierschaltung zuzuführen. Letztere dient u.a. zur Umwandlung der rechteckförmigen Datensignale, welche beispielsweise als im Start-Stop-Verfahren übertragene alphanumerische Zeichen vorliegen, in ein zur Darstellung auf dem Bildschirm des Fernsehempfängers geeignetes Raster.

Bei dem Verbindungsaufbau zum Empfang der Datensignale der Zentralstation ist es wünschenswert, die auf der Fernsprechleitung auftretenden Hörtöne über den Lautsprecher des Fernsehempfängers akustisch überwachen zu können. Durch diese Maßnahme erhält der Benutzer eine Information über den Zustand der Fernsprechleitung, beispielsweise beim Auftreten einer Fehlverbindung. Kommt bei einer aufgebauten Verbindung kein Datensignal an, so erkennt dies eine im Modem vorgesehene Datenerkennungsschaltung und zeigt dies an ihrem Ausgang an. Die Decodierschaltung im Fernsehempfänger schaltet dann nach einer bestimmten Zeit, beispielsweise nach 30 Sekunden, den Modem von der Fernsprechleitung und löst die Verbindung aus. Im Modem ist neben dem Datenempfänger, und der bereits erwähnten Datenerkennungsschaltung noch ein Hörtonempfänger vorhanden. Die Ausgänge dieser Schaltungseinheiten führen die entsprechenden Kriterien über je eine Sendeanordnung und zugehörige Verbindungsleitungen der Decodierschaltung im Fernsehempfänger zu. Es sind hierfür im Modem drei derartige, als Schnittstellensender bezeichnete Sendeanordnungen erforderlich.

Beim Betrieb des Modems besteht die weitere Forderung, daß der Modem aus dem Schleifenstrom der Fernsprechleitung mit Strom versorgt wird. Diese Forderung hat zur Folge, daß die erforderliche galvanische Trennung zwischen der Fernsprechleitung und dem Fernsehempfänger bei den zwischen dem Modem und dem Fernsehempfänger angeordneten Schnittstellensendern durchgeführt werden muß. Ein mit drei derartigen Schnittstellensendern ausgestatteter Modem würde jedoch unter Umständen einen höheren Betriebsstrom benötigen als der von der Fernsprechleitung minimal zur Verfügung stehende Schleifenstrom. Dies gilt vor allem dann, wenn, aus Gründen der Einfachheit optoelektronische Koppler als Schnittstellensender Verwendung finden.

Der Erfindung liegt die Aufgabe zugrunde, eine Anordnung für einen Modem anzugeben, der obengenannte Bedingungen erfüllt und der in Richtung zum Fernsehempfänger nur einen einzigen Schnittstellensender benötigt.

Diese Aufgabe wird erfindungsgemäß dadurch gelöst, daß eine den Schnittstellensender ansteuernde Auswahlschaltung vorgesehen ist, durch welche abhängig vom logischen Zustand am Ausgang der Datenerkennungsschaltung dem Schnittstellensender entweder—falls vorhanden—die Hörtöne oder die empfangenen Datensignale zugeführt werden, und daß die Auswahlschaltung so ausgelegt ist, daß das beim Fehlen sowohl von Hörtönen als auch von Datensignalen dem Schnittsellensender zugeführte Signal der im Fall der Datenübertragung nicht vorkommende binäre Dauerzustand ist.

Im folgenden soll die Erfindung anhand eines Ausführungsbeispiels näher beschrieben und erläutert werden.

Es zeigen:

Fig. 1 eine Blockschaltbild dieses Ausführungsbeispieles,

Fig. 2 die Auswahlschaltung.

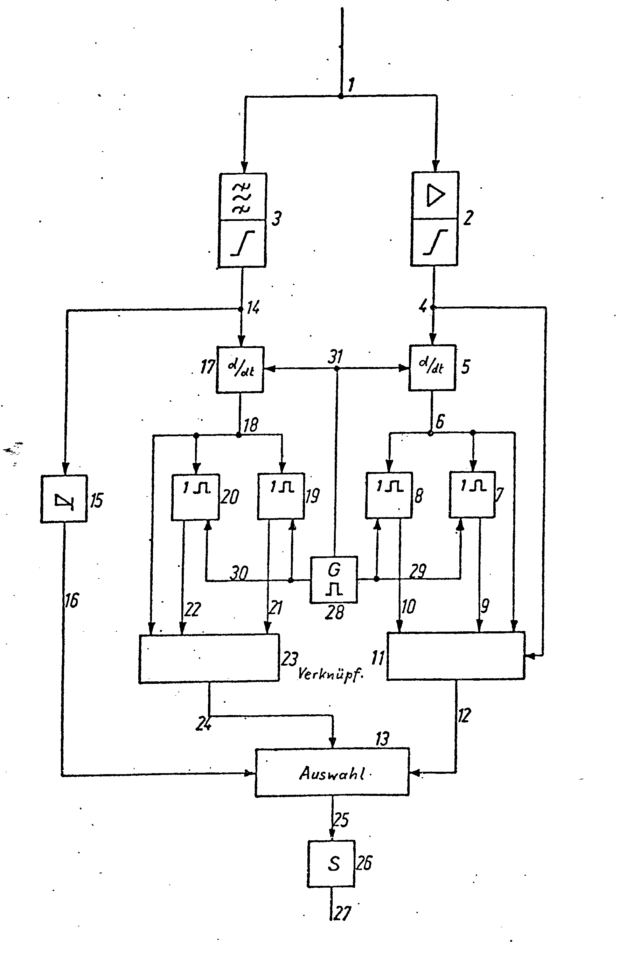

Aus Gründen der Einfachheit sind in Fig. 1 der Sender des Modems sowie Schaltungsdetails für die Gewinnung des Betriebsstromes aus dem Schleifenstrom der Fernsprechleitung und die Umschaltung letzterer vom Fernsprechapparat auf den Modem nicht dargestellt.

Die von der Fernsprechleitung 1 ankommenden Signale gelangen auf den Begrenzerverstärker 2 und die Empfangsfilter-Begrenzerverstärkereinheit 3. Über die Leitung 4 werden diese Signale der Differenzierstufe 5 und der Verknüpfungsschaltung 11 zugeführt. Diese Differenzierstufe 5 leitet von jeder Flanke des am Ausgang des Begrenzerverstärkers 2 anstehenden Signals einen Nadelimpuls ab. Diese Impulse werden über die Leitung 6 den beiden monostabilen Kippstufen 7 und 8 sowie der Verknüpfungsschaltung 11 zugeführt. Die Ausgangsimpulse dieser beiden Kippstufen 7 und 8 gelangen über die Leitungen 9 und 10 zu den weiteren Eingängen der Verknüpfungsschaltung 11. Diese Verknüpfungsschaltung 11 bildet zusammen mit den monostabilen Kippstufen 7 und 8 eine digitalen Bandpaß zum Ausfiltern der an der Fernsprechleitung 1 ankommenden, von der Fernsprechvermittlungsstelle gesendeten Hörtöne von 450 Hz. Die Verknüpfungsschaltung beinhaltet dabei im Prinzip zwei Gatterschaltungen, welche von der Ausgangsimpulsen der Kippstufen 7 und 8 in den Sperr- bzw. Durchlaßzustand gesteuert werden. Die Ausgänge dieser Gatterschaltungen werden mit einem UND-Verhalten aufweisenden weiteren Gatter verknüpft, wodurch sich das erwähnte Bandpaßverhalten ergibt. Die Dauer der an den Ausgängen der beiden Kippstufen 7 und 8 auftretenden Impulse bestimmen die Grenzfrequenzen 400 Hz und 500 Hz dieses digitalen Bandpasses. Die Leitung 12 bildet den Ausgang des oben erwähnten Hörtonempfängers.

Die Empfangsfilter-Begrenzerverstärkereinheit 3 läßt von den an der Fernsprechleitung 1 ankommenden Signalen nur die im Frequenzbereich 1,1...2,3 kHz liegenden modulierten Datensignale durch und sperrt u.a. die mit der Frequenz 450 Hz auftretenden Hörtöne. Der Frequenzbereich von 1,1...2,3 kHz ergibt sich aus der Übertragungsgeschwindigkeit von max. 1200 bit/s und der gewählten binären Modulationsart, im Ausführungsbeispiel der binären Frequenzmodulation. Nach Durchlaufen der Einheit 3 gelangen die modulierten Datensignale über die Leitung 14 zum Demodulator 15 und der Differenzierstufe 17. Im Demodulator 15 werden die modulierten Datensignale wieder in die ursprüngliche binäre Rechteckform zurückverwandelt und über die den Ausgang des obengenannten Datenempfängers bildende Leitung 16 dem zweiten Eingang der Auswahlschaltung 13 zugeleitet. Die Differenzierstufe 17 Auswahlschaltung 13 zugeleitet. Die Differenzierstufe 17 leitet aus jedem Nulldurchgang des auf der Leitung 14 auftretenden modulierten Datensignals einen Nadelimpuls ab. Diese Impulse werden über die Leitung 18 den monostabilen Kippstufen 19 und 20 zugeleitet. Die an den Ausgängen dieser Kippstufen 19 und 20 auftretenden Impulse gelangen über die Leitungen 21 bzw. 22 ebenfalls zur Verknüpfungsschaltung 23. Das Ausgangssignal dieser Verknüpfungsschaltung 23 gelangt über die Leitung 24, welche den Ausgang der oben erwähnten Datenerkennungsschaltung bildet, zum dritten Eingang der Auswahlschaltung 13. Die beiden monostabilen Kippstufen 19 und 20 bilden in Verbindung mit der Verknüpfungsschaltung 23 einen digitalen Bandpaß mit einem Durchlaßbereich von etwa 1...2,4 kHz. Die beiden Grenzfrequenzen dieses Bandpasses werden dabei durch die Dauer der an den Ausgängen der Kippstufen 19 und 20 auftretenden Impulse bestimmt. Die Verknüpfungsschaltung 23 enthält eine logische Schaltung, deren Ausgang nach Ablauf des kürzeren und vor Ablauf des längeren dieser bieden Impulse im H-Zustand ist und während der übrigen Zeit im L-Zustand (H="high", positive Spannung; L="low", hier die Spannung 0 Volt). Tritt während dieses den Durchlaßbereich des digitalen Bandpasses entsprechenden H-Zustandes auf der Leitung 18 ein Impuls auf, so wird dieser H-Zustand auf den Ausgang einer in der Verknüpfungsschaltung 23 angeordneten bistabilen Kippstufe übernommen, Tritt ein solcher Impuls auf Leitung 18 dagegen während des dem Sperrbereich des digitalen Bandpasses entsprechenden L-Zustandes auf, so wird dieser L-Zustand auf den Ausgang der bistabilen Kippstufe übernommen. Tritt daher auf der Fernsprechleitung 1 ein im Frequenzbereich 1,1...2,3 kHz liegendes Datensignal auf, so herrscht auf der Leitung 24 bzw. dem Ausgang der bistabilen Kippstufe der binäre H-Zustand. Tritt auf der Fernsprechleitung 1 dagegen kein Datensignal auf, so herrscht auf der Leitung 24 der binäre L-Zustand.

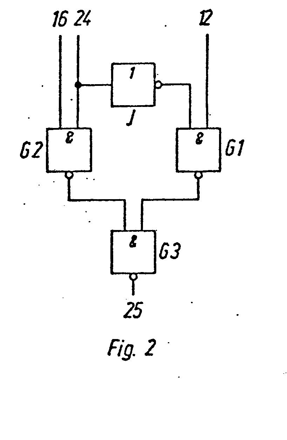

Im folgenden wird kurz auf die Wirkungsweise der in Fig. 2 dargestellten Auswahlschaltung 13 eingegangen. Ist die Leitung 24 im H-Zustand, so ist das Gatter G1 gesperrt und die auf Leitung 16 anstehenden rechteckförmigen Datensignale werden über die geöffneten Gatter G2 und G3 zur Leitung 25 durchgeschaltet. Ist dagegen die Leitung 24 im L-Zustand, so ist das Gatter G2 gesperrt und die auf Leitung 12 anstehenden Hörtöne werden über die geöffneten Gatter G1 und G3 zur Leitung 25 durchgeschaltet.

Damit die Schaltungsanordnung gemäß Fig. 1 vollständig als integrierte Schaltung aufgebaut werden kann, sind die monostabilen Kippstufen 7, 8, 19 und 20 rein digital ohne RC-Glieder ausgeführt. Zum Betrieb dieser Kippstufen sowie der beiden Differenzierstufen 5 und 17 dient die Taktschaltung 28 in Verbindung mit den Taktleitungen 29, 30 und 31. Im Prinzip können natürlich auch monostabile Kippstufen verwendet werden, welche mit RC-Gliedern ausgeführt sind. Ebenso können anstelle der digitalen Bandpässe auch entsprechende Bandpässe mit analogen Bauteilen verwendet werden.

Im folgenden soll kurz ein mögliches Verfahren beschrieben werden wie durch einen Fernsehteilnehmer, der den Abruf von Bildschirmdaten von einer Zentralstation wünscht, der Aufbau einer Verbindung zu dieser Zentralstation geschieht. Der Aufbau einer solchen Verbindung wird dadurch eingeleitet, daß ein durch den Fernsehteilnehmer mittels Knopfdruck ausgelöstes Potential von der Decodierschaltung im Fernsehempfänger über eine Schnittstellenleitung zum Modem gesendet wird. Dieses Potential bewirkt ein Anschalten der Fernsprechleitung auf den Modem mit gleichzeitigem Schleifenschluß unter der Bedingung, daß der Hörer des zugeordneten Fernsprechapparates aufgelegt ist. Nach Auswertung der mittels eines Hörtones von der Vermittlungsstelle ausgesendeten Wahlaufforderung wird im Modem ein Rufnummerngeber gestartet. Dieser in Fig. 1 nicht dargestellte Rufnummerngeber wählt automatisch die Rufnummer der Zentralstation an. Bis zum Eintreffen der Ruffrequenz bei der Zentralstation findet noch keine Datenaussendung statt und die auf der Leitung 12 auftretenden Hörtöne werden über die Leitung 25 zum Schnittstellensender 26 durchgeschaltet. Nach Eintreffen der Ruffrequenz bei der Zentralstation erfolgt das Aussenden der gewünschten Datensignale zum rufenden Modem. Die auf der Leitung 16 auftretenden rechteckförmigen Datensignale werden nun über die Leitung 25 zum Schnittstellensender 26 durchgeschaltet.

Die zum Schnittstellensender 26 durchgeschalteten Signale werden über die Leitung 27 der Decodierschaltung im Fernsehempfänger zugeführt. Diese Decodierschaltung unterscheidet zwischen Hörtönen und Datensignalen, um erstere dem Lautsprecher zuzuführen und letztere für die Sichtbarmachung auf dem Bildschirm zu decodieren. Bei fehlerhaften Fernsprechverbindungen kann der Fall auftreten, daß weder Hörtöne noch Datensignale vorhanden sind. Um diesen Fall zu erkennen, ist die Auswahlschaltung 13 so ausgelegt, daß der dabei auf der Leitung 25 konstant auftretende Binärzustand ein Zustand ist, der bei Datenempfang nicht als Dauerzustand auftreten kann. Ein solcher verbotener Dauerzustand ist beispielsweise beim Empfang von Datenzeichen im Start-Stop-Betrieb die Startpolarität, da bei einem solchen Betrieb während der Übertragungspausen stets Stoppolarität herrscht. Tritt auf der Leitung 25 der im Datenbetrieb verbotene Dauerzustand auf, im Ausführungsbeispiel der L-Zustand, so wird über ein Zeitglied in der Decodierschaltung des Fernsehempfängers und eine entsprechende Leitung nach z.B. 30 Sekunden der Modem wieder von der Fernsprechleitung getrennt.

Wegen des sehr geringen schaltungstechnischen Aufwandes wurde für den Schnittstellensender 26 beim Ausführungsbeispiel ein optoelektronischer Koppler verwendet. Da letzterer zum Betrieb etwa 5 mA benötigt und der von der Fernsprechleitung minimal abgebbare Schleifenstrom nur 17 mA beträgt, wird durch die Erfindung ein Betrieb mit einem solchen optoelektronischen Koppler als Schnittstellensender ermöglicht.

**Patentansprüche**

1. Anordnung für einen Modem zum Empfang von auf dem Bildschirm eines Fernsehempfängers darzustellenden Datensignalen, die von einer Zentralstation ausgesendet und über eine Fernsprech-Wählverbindung übertragen werden, mit einem Hörtonempfänger, (2, 5—11), einem Datenempfänger (3, 15), einer Datenerkennungsschaltung (17—23) und einem einzigen Schnittstellensender in Richtung zum Fernsehempfänger, dadurch gekennzeichnet, daß eine den Schnittstellensender (26) ansteuernde Auswahlschaltung (13) vorgesehen ist, durch welche abhängig vom logischen Zustand am Ausgang (24) der Datenerkennungsschaltung dem Schnittstellensender (26) entweder—falls vorhanden—die Hörtöne oder die empfangenen Datensignale zugeführt werden, und daß die Auswahlschaltung so ausgelegt ist, daß das beim fehlen sowohl von Hörtönen als auch von Datensignalen dem Schnittstellensender zugeführte Signal der im Fall der Datenübertragung nicht vorkommende binäre Dauerzustand ist.

2. Anordnung nach Anspruch 1, dadurch gekennzeichnet, daß in der Auswahlschaltung (13) zwei Gatter (G1, G2) vorgesehen sind, welche eingangsseitig über einen Inverter (J) verknüpft und ausgangsseitig mit beiden Eingängen eines dritten Gatters (G3) verbunden sind, und daß abhängig vom logischen Zustand am Invertereingang entweder die am ersten (G1) oder zweiten Gatter (G2) anliegende Information zum Ausgang des dritten Gatters (G3) durchgeschaltet wird.

**Claims**

1. Arrangement for a modem for the reception of data signals to be displayed on the screen of a television receiver, which are sent from a central station and transmitted via a dialled telephone connection, with an audio-tone receiver (2, 5—11), a data receiver (3, 15), a data-detection circuit (17—23), and a unique interface transmitter in direction to the television receiver, characterized in that a selection circuit (13) controlling the interface transmitter (26) is provided, by which dependent of the logical condition of the data-detection circuit, either—if there are—the audio tones or the received data signals are applied, and that the selection circuit is designed such that the signal applied to the interface transmitter, when audio tones as well as data signals are missing, is the permanent binary condition which does not exist in case of the data transmission.

2. Arrangement as per Claim 1, characterized in that two gates (G1, G2) are provided in the selection circuit (13), which are chained via an inverter (J) on the input end, and connected to both inputs of a third gate (G3) on the output end, and that dependent of the logical condition at the inverter input, the information applied to the first (G1) or second gate (G2), is through-connected to the output of the third gate (G3).

**Revendications**

1. Disposition de modem pour la réception de signaux de données à afficher sur l'écran d'un récepteur de télévision, qui sont émis par un poste central et transmis par l'intermédiaire d'une liaison de sélection téléphonique, comportant un récepteur de son audible (2, 5 à 11), un récepteur de données (3, 15), un circuit de reconnaissance de données (17 à 23) et un seul émetteur de point d'intersection en direction du récepteur de télévision, caractérisée en ce qu'elle comporte un circuit sélecteur (13) adressant l'émetteur de point d'intersection (26) et par lequel, sous la dépendance de l'état logique à la sortie (24) du circuit de reconnais-

**0 005 770**

sance de données, ou bien les sons audibles— s'ils existent—ou bien les signaux de données reçus sont amenés à l'émetteur de point d'intersection, et en ce que le circuit sélecteur est agencé de telle sorte que le signal amené à l'émetteur de point d'intersection en l'absence à la fois de sons audibles et de signaux de données est l'état binaire permanent, qui ne se présente pas dans le cas de la transmission de données.

2. Disposition selon la revendication 1, caractérisée en ce que dans le circuit sélecteur (13) sont prévues deux portes (G1, G2) qui sont combinées de côté de l'entrée par l'intermédiaire d'un inverseur (J) et sont reliées du côté de la sortie aux deux entrées d'une troisième porte (G3), et en ce que sous la dépendance de l'état logique à l'entrée de l'inverseur, ou bien l'information existant á la première porte (G1) ou bien l'information existant à la deuxième porte (G2) sont acheminées à la sortie de la troisième porte (G3).

0 005 770

Fig. 2